Europäisches Patentamt

(19) European Patent Office

Office européen des brevets

(11) Publication number : **0 324 634 B1**

# (12) EUROPEAN PATENT SPECIFICATION

(45) Date of publication of patent specification :
**29.07.92 Bulletin 92/31**

(51) Int. Cl.⁵ : **C02F 1/28, C02F 1/42**

(21) Application number : **89300302.0**

(22) Date of filing : **13.01.89**

(54) Brewing apparatus for brewing tea or coffee including water purification apparatus.

(30) Priority : **15.01.88 GB 8800908**

(43) Date of publication of application :
**19.07.89 Bulletin 89/29**

(45) Publication of the grant of the patent :
**29.07.92 Bulletin 92/31**

(84) Designated Contracting States :
**AT BE CH DE ES FR GB GR IT LI LU NL SE**

(56) References cited :
**EP-B- 0 166 022
DE-A- 2 163 836
DE-A- 3 317 846
DE-A- 3 535 679
DE-A- 3 638 586
DE-C- 3 737 476
GB-A- 2 197 647
US-A- 2 017 456**

(73) Proprietor : **ARA COFFEE CLUB LIMITED
Ara House Honey End Lane Tilehurst
Reading Berkshire RG3 4QL (GB)**

(72) Inventor : **Devlin, James Victor
Tanglewood Ash Lane
Burghfield Common Reading Berkshire (GB)**
Inventor : **Gardiner, Michael Anthony
37 Hithercroft Road Downley
High wycombe Buckinghamshire (GB)**

(74) Representative : **Carpmael, John William
Maurice et al
CARPMAELS & RANSFORD 43 Bloomsbury
Square
London, WC1A 2RA (GB)**

## Description

This invention relates to brewing apparatus for brewing tea or coffee, including water purification apparatus.

Apparatus is known, such as is shown in UK Patent No. 1344504, comprising a generally tubular cartridge of activated charcoal and resin, with meshes or screens at either end thereof. Such cartridges are typically used in a funnel or a continuous-flow in-line unit, in which water is fed in one end of the cartridge and drains under gravity out the other end, where it is received by a receiving vessel, such as a jug. Known apparatus of this general type has two notable disadvantages.

The first disadvantage is that when a batch of water has been purified and the cartridge is left standing unused for a period of time, the water drains from the cartridge and the purifying agents in the cartridge dry out. This is disadvantageous because (a) purifying agents such as activated charcoal carbon and ion exchange resins are less active when dry and require time to be regenerated to their most active state on being re-wetted and (b) purifying agents, which are generally in granular form, are more susceptible to bacterial growth when dry.

The second disadvantage is that the water flows through the cartridge at a rate which is determined only by the dimensions of the cartridge, the material held therein and the apertures in the screens at either end thereof. Thus, if a cartridge is designed to contain a volume of purifying agent that will purify a required volume of water before becoming expended, the water may flow through the cartridge at such a rate that the apparent activity of the ingredients is very quickly reduced and the intended performance will not be achieved. This effect is attributed to hydrogen ions on the surface of ion exchange resin in the cartridge being rapidly replaced by the flowing water. Ions further within the resin do not have sufficient time to migrate to the surface of the resin for ion exchange with the water. This migration is technically known as "recovery". It would, in theory, be possible to design a cartridge in which the purifying agent inherently provided sufficient resistance to water flow to sufficiently reduce the velocity of flow past the resin to prevent rapid reduction of the apparent activity, however the cartridge would be so tall and thin as to be impractical for any significant capacity. In known cartridges, the screens are designed to have gaps which are as large as possible without allowing purifying material to escape, and which as far as practicable do not restrict the flow of water through the cartridge.

Water purification apparatus is also known, for example from US-A-2017456 and EP-B-166022, which comprises a first vessel for holding water to be purified and a second vessel containing purifying agent, the first vessel being positioned above and communicating with the second vessel and the apparatus being arranged such that when the first vessel is filled with water, the water flows through the purifying agent in the second vessel and out of outlet means of the second vessel, the outlet means of the second vessel being positioned at such a height in relation to the purifying agent that the agent remains substantially submerged in water when the first vessel subsequently empties.

It is also known to provide such apparatus with flow restrictor means for substantially restricting the rate of flow of water through the agent.

Infusion brewers are well known in the art and typically comprise a collecting tank, and an outlet therefrom leading to a through flow heating means, the heating means having a predetermined required flow rate, and being adapted to heat water from the collecting tank for infusion.

The present invention provides brewing apparatus for brewing tea or coffee comprising a collecting tank and an outlet therefrom leading to through-flow heating means, the heating means having a predetermined required flow rate, and being adapted to heat water from the collecting tank for infusion, characterised by water purification apparatus comprising a first vessel for holding water to be purified and a second vessel containing purifying agent, the first vessel being positioned above and communicating with the second vessel and the purification apparatus being arranged such that when the first vessel is filled with water, the water flows through the purifying agent in the second vessel, out of outlet means of the second vessel and into the collecting tank, the outlet means being positioned at such a height in relation to the purifying agent that the agent remains substantially submerged in water even when the first vessel subsequently empties, the purification apparatus further including flow restrictor means for substantially restricting the rate of flow of water through the purifying agent to one at or marginally above that required by the heating means.

The purifying agent is preferably contained in a readily removable cartridge, substantially contained within the second vessel. It is preferred that the cartridge occupies a port connecting the first and second vessels and may be removed from the apparatus by access through the first vessel. A cartridge could be made with screens having such a low void ratio, and such small holes that the screens alone would provide resistance to water flow, slowing down the flow through the cartridge and thereby increasing the practical life of the purifying agents. For cartridges which are intended for use in many everyday applications such as tea or coffee brewing apparatus, it is considered that, for a reasonable distribution of holes, the size of the holes required would be so small as substantially to increase the cost of tooling and of manufacturing of the cartridges. The purifying agent is preferably retained within the cartridge by means of perforated screens at upper and lower ends of the cartridge, with the flow restrictor means providing a resistance to flow substantially greater than the cartridge screens and the purifying agent therebetween.

Preferably, but for the flow restrictor means, the cartridge has sufficient cross-sectional area to provide about 1.25 or more times the volume flow rate required by the heating means, and preferably about two to ten times that flow rate, whereas the flow restrictor means restricts the volume flow rate through the cartridge to a rate equal to or marginally above that required flow rate.

The flow restrictor means are preferably arranged to allow water to flow into the collecting tank at a rate about 10% to about 50% greater than the predetermined required flow rate, and preferably about 10% to 20% greater.

A level sensor may be provided in the collecting tank, arranged to switch off the heating means when the water level therein falls below a predetermined level.

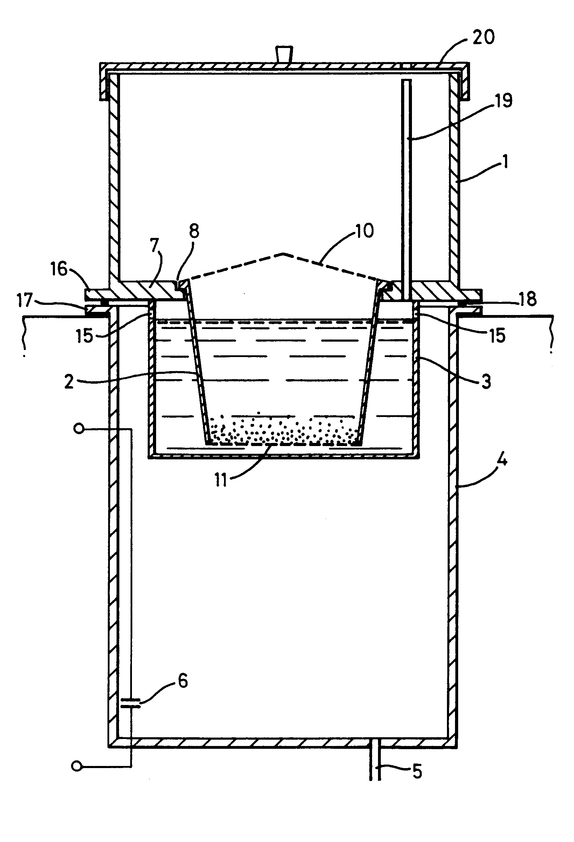

A preferred embodiment of the invention will now be described, by way of example, with reference to the drawing, which shows water purifying apparatus incorporated in brewing apparatus according to the invention.

In the Figure, there is shown an upper tank 1, a cartridge 2, a lower tank 3 and a collecting tank 4. The collecting tank 4 is part of a known tea or coffee brewer and has an outlet pipe 5 leading to a flash heater (not shown) from which heated water is passed on to the tea or coffee for brewing.

The collecting tank has a level sensor 6 for switching off the heater when the tank is empty. The upper and lower tanks, 1 and 3 respectively, are integrally formed and separated by an intermediate wall 7. The intermediate wall has a circular hole or port therein and the cartridge sits in the hole 8, making an interference fit therewith.

The cartridge 2 has a bucket-shaped body with a lid 10 permanently mounted thereon and attached thereto by food-grade adhesive. The lid 10 is formed as a screen comprising perforations or concentric rings mounted on radial ribs.

Upper and lower faces of alternate concentric rings lie in substantially the same plane along any given radial line. In this manner, narrow circular skirts are formed between adjacent rings. An example of such a construction can be found in UK patent no. 1344504. In the present case, the spacing between the rings is about 0.32-0.38mm. The cartridge 2 has a base 11 having a similar construction. Within the cartridge 2, there is a water purifying agent comprising activated charcoal/carbon and ion exchange resin. Suitable ion exchange resins are proprietary resins examples of which are manufactured by Rohm & Hass, Dow Chemicals, Bayer or Amberlite. The ratio of carbon to resin may be chosen to suit different water conditions, from 1:1 to 1:9 by weight.

To prevent the smallest resin beads from escaping from the cartridge, the charcoal/carbon and resin granules are preferably placed in a nylon mesh bag before being put in the cartridge. It is also preferred that the charcoal/carbon and resin instead of being mixed, preferably are put in two layers with the charcoal/carbon on the bottom. The charcoal/carbon is a silver impregnated type commonly used in domestic water purification systems. It is also preferred that the entire cartridge is irradiated before use to ensure thorough sterilization.

Towards the top of the wall of the lower tank 3 there are holes 15 through that wall, communicating with the collecting tank 4. There are four such holes, each having a diameter of about 6mm. The size and number of these holes is determined by experiment or alternatively a slide ring is provided around the outer surface of the tank 3 which, by rotation will further choke the holes. Once determined, the ring may be set in position.

The upper tank 1 has an outwardly projecting annular flange 16 which rests on a corresponding flange 17 on the collecting tank 4. A seal is formed between these flanges by means of an "O"-ring 18. A vent pipe 19 is provided extending from the lower tank 3 upwards to the top of the upper tank. The upper tank has a lid 20.

The operation of the apparatus is as follows:- With the tea or coffee brewer set for brewing, water is poured into the upper tank 1, to a level sufficient to provide the required quantity of tea or coffee. The water flows through the screen 10, the purifying agent in the cartridge 2, the screen 11 and the holes 15, which act as flow restrictor means, and into the collecting tank 4. The lower tank 3 will already be full of water up to the level of the holes 15 from previous use.

The size and number of the holes 15 are such as to allow a greater, but not excessively greater flow rate of water through them than through the outlet pipe 5, when the cartridge is in place and the upper tank 1 is substantially full. For this reason, the water flows out of the outlet pipe 5 but at the same time the level of water in the collecting tank 4 slowly rises. Level sensor 6 is positioned so as to allow the heater of the brewer to operate almost as soon as the water begins to flow, if not immediately. From the outlet pipe 5, the water flows to the flash heater and then to the tea or coffee for immediate infusion. The flow rate of the water through the heater and into the tea or coffee is carefully controlled or predetermined to give the required infusion time.

Once all the water in the upper tank 1 has drained through the lower tank 3 (i.e. the level in the lower tank has fallen to the level of the bottom of the holes 15), the level of water in the collecting tank 4 will fall until it is empty, whereupon the level sensor 6 will switch off the heater. The cartridge 2 remains substantially immersed in water in the lower tank, which keeps the active ingredients in their most active state, and which restricts bacterial growth.

From the above description, it can be seen that the critical factors in determining the flow rate through the cartridge 2 are the size and number of the holes 15. These holes should not be so small as to allow the heater to be starved of water but should be as small as possible within that constraint in order to reduce the flow rate through the cartridge so that the particles of resin therein do not become depleted of H+ ions (or other specified ions) at their surfaces, but have as much time as possible to migrate from within the resin particles to their surfaces. There should preferably be a reasonable margin of safety above the minimum flow rate. This margin of safety is reflected in the rate of rise of the water in the collecting tank. It is not necessary that the flow rate into the collecting tank is always greater than the flow rate out. As the head of water in the upper tank 1 decreases, the flow rate through the holes 15 can be expected to fall. The important criterion is that, until the upper tank is completely empty, the collecting tank 4 should not be allowed to empty.

Thus, for a brewer having a required throughput flow rate of 400-450 ml of water per minute, a flow rate of 500-600 ml per minute through the holes in the lower tank is suitable, i.e. a flow rate about 10-50% greater than is necessary.

The capacity of the cartridge is 0.495 litres, equivalent to about 300g of charcoal/resin mixture.

It will, of course, be understood that the above description has been given by way of example only, and that modifications of detail can be made within the scope of the invention, as defined by the appended Claims.

**Claims**

1. Brewing apparatus for brewing tea or coffee comprising a collecting tank (4) and an outlet (5) therefrom leading to through-flow heating means (not shown), the heating means having a predetermined required flow rate, and being adapted to heat water from the collecting tank (4) for infusion, characterised by water purification apparatus comprising a first vessel (1) for holding water to be purified and a second vessel (3) containing purifying agent (2), the first vessel (1) being positioned above and communicating with the second vessel (3) and the purification apparatus being arranged such that when the first vessel (1) is filled with water, the water flows through the purifying agent (2) in the second vessel (3), out of outlet means (15) of the second vessel (3) and into the collecting tank (4), the outlet means (15) being positioned at such a height in relation to the purifying agent (2) that the agent remains substantially submerged in water even when the first vessel (1) subsequently empties, the purification apparatus further including flow restrictor means (15) for substantially restricting the rate of flow of water through the purifying agent (2) to one at or marginally above that required by the heating means.

2. Apparatus according to claim 1 wherein the purifying agent is contained in a removable cartridge (2) substantially contained within the second vessel (3).

3. Apparatus according to claim 2 wherein the cartridge (2) occupies a port connecting the first and second vessels and can be removed by access through the first vessel (1).

4. Apparatus according to claim 2 or claim 3 wherein, but for the flow restrictor means (15), the cartridge has sufficient cross-sectional area to provide about 1.25-10 times the water flow rate required by the through-flow heating means.

5. Apparatus according to any one of claims 2-4 wherein the purifying agent is retained within the cartridge (2) by means of perforated screens (10, 11) at upper and lower ends of the cartridge and wherein the flow restrictor means (15) provides a resistance to flow substantially greater than the cartridge screens (10, 11) and the purifying agent therebetween.

6. Apparatus according to any one of claims 1-5, the flow restrictor means (15) being arranged to allow water to flow into the main tank (4) at a rate about 10% to about 50% greater than the predetermined required flow rate.

7. Apparatus according to claim 6 having a level sensor (6) in the collecting tank (4) arranged to switch off the heating means when the water level therein falls below a predetermined level.

8. Apparatus according to any preceding claim wherein the purifying agent comprises activated charcoal and ion exchange resin in a ratio of between about 1:1 and about 1:9 by weight.

**Patentansprüche**

1. Vorrichtung zur Zubereitung von Tee oder Kaffe, umfassend einen Sammeltank (4) und einen Auslaß (5), der zu einem Durchlauferhitzer (nicht gezeigt) führt, wobei dee Erhitzer eine vorbestimmte erforderliche Durchflußrate hat und so ausgebildet ist, daß Wasser aus dem Sammeltank (4) zum Aufguß erhitzt wird, gekennzeichnet durch eine Wasser-Reinigungs-Vorrichtung, die ein erstes Gefäß (1) zur Aufnahme von zu reinigendem Wasser und ein zweites Gefäß (3), das ein Reinigungsmittel (2) enthält, umfaßt, wobei das erste Gefäß (1) oberhalb des zweiten Gefäßes (3) angeordnet ist und damit in Verbindung steht und wobei die Reinigungs-Vorrichtung so angeordnet ist, daß dann, wenn das erste Gefäß (1) mit Wasser gefüllt ist, das Wasser durch das Reinigungsmittel (2) in das zweite Gefäß (3), aus der Auslaß-Einrichtung (15) des zweiten Gefäßes (3) und in den Sammeltank (4) fließt, wobei die Auslaßeinrichtung (15) in einer solchen Höhe bezüglich des Reinigungsmittels (2) angeordnet ist, daß das Mittel im wesentlichen in Wasser eingetaucht bleibt, auch wenn das erste Gefäß (1) sich anschließend leert, wobei die Reinigungs-Einrichtung weiterhin eine Durchflußbegrenzereinrichtung (15) einschließt, um die Durchflußrate von Wasser durch das Reinigungsmittel (2) im wesentlichen auf eine solche Rate einzuschränken, die für den Erhitzer erforderlich ist oder wenig darüber.

2. Vorrichtung nach Anspruch 1, worin das Reinigungsmittel in einer entfernbaren Patrone (2) enthalten ist, die sich im wesentlichen in dem zweiten Gefäß (3) befindet.

3. Vorrichtung nach Anspruch 2, worin die Patrone (2) sich in einem Durchgang, der das erste mit dem zweiten Gefäß verbindet, befindet und durch Zugriff durch das erste Gefäß (1) entfernt werden kann.

4. Vorrichtung nach Anspruch 2 oder Anspruch 3, worin die Patrone, bis auf die Durchflußbegrenzereinrichtung, einen ausreichenden Querschnitt hat, um etwa das 1,25-bis 10-fache der Wasser-Durchflußrate zu liefern, die für den Durchlauferhitzer erforderlich ist.

5. Vorrichtung nach einem der Ansprüche 2 bis 4, worin das Reinigungsmittel in der Patrone (2) mit Hilfe von perforierten Sieben (10, 11) am unteren und oberen Ende der Patrone gehalten wird und worin die Durchflußbegrenzereinrichtung einen Strömungswiderstand liefert, der wesentlich größer ist als der Widerstand der Patronensiebe (10, 11) und des dazwischenliegenden Reinigungsmittels.

6. Vorrichtung nach einem der Ansprüche 1 bis 5, worin die Durchflußbegrenzereinrichtung (15) so angeordnet ist, daß Wasser in den Haupttank (4) mit einer Rate fließt, die etwa 10 bis etwa 50 % größer ist als die vorbestimmte erforderliche Durchflußrate.

7. Vorrichtung nach Anspruch 6, die einen Pegelfühler (6) im Sammeltank (4) aufweist, der so angeordnet ist, daß er den Erhitzer abschaltet, wenn der Wasserpegel unter einen vorbestimmten Pegel fällt.

8. Vorrichtung nach einem der vorhergehenden Ansprüche, worin das Reinigungsmittel Aktivkohle und ein Ionen-Austausch-Harz umfaßt in einem Verhältnis von etwa 1:1 bis etwa 1:9, bezogen auf Gewicht.

**Revendications**

1. Appareil d'infusion pour infuser du thé ou du café, comprenant un réservoir collecteur (4) et un orifice de sortie (5) à partir de celui-ci menant à un moyen de chauffage à écoulement traversant non illustré), le moyen de chauffage ayant un taux d'écoulement requis prédéterminé, et étant apte à chauffer de l'eau à partir du réservoir collecteur (4) pour l'infusion, caractérisé par un appareil de purification d'eau, comprenant un premier réservoir (1) pour contenir de l'eau devant être purifié et un second réservoir (3) contenant un agent purificateur (2), le premier réservoir (1) étant positionné au-dessus et communiquant avec le second réservoir (3) et l'appareil de purification étant agencé de telle façon que lorsque le premier réservoir (1) est rempli avec de l'eau, l'eau l'écoule à travers l'agent de purification (2) dans le second réservoir (3), en-dehors du moyen de sortie (15) du second réservoir (3) et dans le réservoir collecteur (4), le moyen de sortie (15) étant positionné à une telle hauteur par rapport à l'agent purificateur (2) que l'agent reste sensiblement submergé dans l'eau même si le premier réservoir (1) se vide sensiblement, l'appareil de purification incluant en outre un moyen restricteur d'écoulement (15) pour restreindre sensiblement le taux d'écoulement de l'eau à travers l'agent purificateur (2) à un, à ou bien légèrement audessus de celui requis par le moyen de chauffage.

2. Appareil selon la revendication 1, dans lequel l'agent de purification est contenu dans une cartouche amovible (2) contenue sensiblement à l'intérieur du second réservoir (3).

3. Appareil selon la revendication 2, dans lequel la cartouche (2) occupe un orifice reliant les premiers et second réservoirs et peut être retiré par accès à travers le premier réservoir (1).

4. Appareil selon la revendication 2 ou 3, dans lequel, mais pour le moyen restricteur d'écoulement 15, la cartouche a une zone en coupe transversale suffisante pour procurer environ 1,25-10 fois le taux d'écoulement d'eau requis par le moyen de chauffage à écoulement traversant.

5. Appareil selon l'une des revendications 2 à 4, dans lequel l'agent purificateur est retenu à l'intérieur de la cartouche (2) au moyen d'écrans perforés (10,11) aux extrémités supérieure et inférieure de la cartouche et dans lequel le moyen de restriction d'écoulement (15) procure une résistance à l'écoulement sensiblement plus élevée que les écrans de cartouche (10, 11) et l'agent de purification entre.

6. Appareil selon l'une quelconque des revendications 1 à 5, le moyen restricteur d'écoulement (15) étant agencé pour permettre à l'eau de s'écouler dans le réservoir principal (4) à un taux environ 10% à environ 50% plus élevé que le taux d'écoulement requis prédéterminé.

7. Appareil selon la revendication 6, ayant un détecteur de niveau (6) dans le réservoir collecteur (4) agencé pour commuter le moyen de chauffage lorsque le niveau d'eau à l'intérieur tombe sous un niveau prédéterminé.

8. Appareil selon l'une des revendications précédentes, dans lequel l'agent de purification comprend du charbon activé et une résine à échange d'ions dans un rapport d'entre environ 1:1 et environ 1:9 par poids.